# EUROPÄISCHE PATENTSCHRIFT

(11) **EP 3 157 758 B1**
(45) Veröffentlichungstag und Bekanntmachung des Hinweises auf die Patenterteilung: **07.10.2020**
(21) Anmeldenummer: 15723840.3
(22) Anmeldetag: 15.05.2015
(51) Int. Cl.: B60B 5/02, B60B 21/00, B60B 21/12

(54) **FELGE FÜR EIN FAHRZEUGRAD, INSBESONDERE FÜR EIN KRAFTFAHRZEUGRAD**
RIM FOR A VEHICLE WHEEL, IN PARTICULAR FOR A MOTOR VEHICLE WHEEL
JANTE POUR ROUE DE VÉHICULE, EN PARTICULIER POUR ROUE DE VÉHICULE AUTOMOBILE

(30) Priorität: 18.06.2014 DE 102014009074
(43) Veröffentlichungstag der Anmeldung: 26.04.2017
(73) Patentinhaber: Audi AG, 85045 Ingolstadt (DE)
(72) Erfinder: KUNSCH, Peter, 85123 Karlskron (DE)
(74) Vertreter: Reichert, Thomas Klaus
(86) Internationale Anmeldenummer: PCT/EP2015/001005
(87) Internationale Veröffentlichungsnummer: WO 2015/192933

(56) Entgegenhaltungen:
- EP-A1- 1 055 527
- DE-T2- 60 009 626
- DE-T5-112004 002 168
- JP-A- 2002 187 402
- US-A- 4 896 921

## Beschreibung

Die Erfindung betrifft eine Felge für ein Fahrzeugrad, insbesondere für ein Kraftfahrzeugrad, nach dem Oberbegriff des Patentanspruches 1 sowie ein Verfahren zur Optimierung des Rollgeräuschs eines Fahrzeugrads, insbesondere eines Kraftfahrzeugrads, nach dem Oberbegriff des Patentanspruches 9.

Die Optimierung von Fahrzeuggeräuschen ist ein wesentlicher Aspekt in der Fahrzeugentwicklung, insbesondere der Kraftfahrzeugentwicklung. Hierzu zählt auch die Optimierung des Rollgeräuschs eines Fahrzeugs, das vor allem durch das Abrollen der Fahrzeugräder auf der Fahrbahn entsteht. Dieses Rollgeräusch wird regelmäßig durch Resonanzen verstärkt, beispielsweise durch Reifentorusresonanzen, die sich auf Luftsäulenschwingungen im Hohlraum des Fahrzeugrads zurückführen lassen. Einer der in diesem Schwingsystem beteiligten Körper ist dabei üblicherweise auch die Felge des Fahrzeugrads. Da die Schwingungen der Felge zudem über Körperschall ins Innere des Fahrzeuges eingeleitet werden, wirken sich diese erheblich auf die Geräuschkulisse im Inneren des Fahrzeuges aus.

Um das Rollgeräusch des Fahrzeuges, insbesondere im Inneren des Fahrzeuges, zu verringern, ist es beispielhaft aus der DE 10 2010 052 919 A1 bekannt, an einer Felge eines Fahrzeugrads ein ringförmiges Dämpfungselement zur Dämpfung von im Betrieb des Kraftfahrzeuges entstehenden Schwingungen anzuordnen. Dieses Dämpfungselement ist am Außen- oder Innenumfang der Felge umlaufend angeordnet und umfasst zwei konzentrische Ringelemente, von denen ein erstes Ringelement eine radial innere Position und ein zweites Ringelement eine radial äußere Position an der Felge einnimmt. Das erste Ringelement dient dabei im Wesentlichen eine Befestigung des Dämpfungselements, während das zweite Ringelement der Bedämpfung der Schwingungen dient. In einer bevorzugten Ausführung ist das zweite Ringelement hier aus einem Elastomer-Vulkanisat mit darin einvulkanisierten Stahlseilen als Tilgermasse hergestellt.

Aus der DE 600 09 626 T2 ist ein Felge bekannt, wobei am Felgenbett der Felge mehrere bogenförmige Stege, in Felgenumfangsrichtung gesehen, gleichmäßig verteilt angeordnet sind.

In der DE 11 2004 002 168 T5 ist eine Reifen-Rad-Anordnung beschrieben, bei der eine Resonanzfrequenz einer Kavität eines Luftreifens und die Eigenfrequenz des Rades beispielsweise durch Verändern der Querschnittsfläche der Kavität des Luftreifens, durch Verwendung eines schwereren Materials für das Rad oder durch Verdicken des Rades optimal eingestellt wird.

Die JP 2002 187402 A zeigt eine Felge mit einem scheibenförmigen Abschnitt, der die Nabe umfasst. Der scheibenförmige Abschnitt ist dabei durch eine angeschweißte Rippe verstärkt.

Aufgabe der Erfindung ist es, eine Felge für ein Fahrzeugrad, insbesondere für ein Kraftfahrzeugrad, bereitzustellen, mittels der das Rollgeräusch eines Fahrzeuges auf einfache und effektive Weise optimiert werden kann.

Diese Aufgabe wird durch die Merkmale der unabhängigen Ansprüche gelöst. Bevorzugte Weiterbildungen sind in den Unteransprüchen offenbart.

Gemäß Anspruch 1 ist eine Felge für ein Fahrzeugrad, insbesondere für ein Kraftfahrzeugrad vorgeschlagen. Erfindungsgemäß weist die Felge zur Optimierung des Rollgeräuschs des Fahrzeugrades, insbesondere zur definierten Einstellung und/oder Verschiebung wenigstens einer Resonanzfrequenz des Fahrzeugrads, wenigstens einen lokal begrenzten steifigkeitsveränderten Bereich auf, an oder in dem die Steifigkeit der Felge gegenüber einem unmittelbar angrenzenden Felgenbereich und/oder gegenüber einem Grund- oder Herstellzustand der Felge in diesem Bereich verändert ist. Erfindungsgemäß ist der wenigstens eine steifigkeitsveränderte Bereich durch eine Aufschweißung und/oder durch einen gefügeveränderten Bereich gebildet.

Auf diese Weise kann das Rollgeräusch des Fahrzeugrads besonders effektiv optimiert werden, da durch Erhöhung oder Verringerung der Felgen-Steifigkeit an dem wenigstens einen steifigkeitsveränderten Bereich beispielsweise eine Resonanzfrequenz des Fahrzeugrads, bei der die Schwingungen des Fahrzeugrads besonders hohe Amplituden erreichen, gezielt eingestellt und/oder verschoben werden kann. So kann beispielsweise bei einer häufig auftretenden und ein störendes Rollgeräusch bewirkenden Resonanzfrequenz des Fahrzeugrads die Resonanzfrequenz in einen höheren oder tieferen Frequenzbereich verschoben bzw. verlagert werden. Dieser Frequenzbereich kann beispielsweise so gewählt werden, dass das Fahrzeugrad während einer Fahrt mit dem Fahrzeug nicht in diesem Frequenzbereich angeregt wird und daher nicht mehr in die störende Resonanz gerät. Alternativ kann die Frequenz auch derart gewählt werden, dass sich trotz auftretender Resonanz kein störendes Rollgeräusch ergibt. Des Weiteren ist die erfindungsgemäße Veränderung der Felgen-Steifigkeit auch eine besonders einfache Möglichkeit, das Rollgeräusch des Fahrzeugs zu optimieren, da dies, wie im Folgenden noch erläutert wird, auf einfache Weise umgesetzt bzw. realisiert werden kann.

Die Begrifflichkeit "Felge" umfasst hier ausdrücklich den gesamten Teil des Fahrzeugrads ohne Fahrzeugreifen, das heißt, dass durch diese Begrifflichkeit sowohl der den Fahrzeugreifen halternde Felgenring als auch die das Verbindungsstück zwischen Felgenring und Radnabe des Fahrzeuges ausbildende Radschüssel umfasst ist.

In einer bevorzugten Ausführung der erfindungsgemäßen Felge kann die Felge mehrere lokal begrenzte und/oder gleich ausgebildete steifigkeitsveränderte Bereiche aufweisen, die in Felgenumfangsrichtung gesehen voneinander beabstandet sind, insbesondere gleichmäßig voneinander beabstandet sind. Auf diese Weise können die Resonanzschwingungen besonders einfach gezielt eingestellt und/oder verschoben werden, da diese regelmäßig durch radial auf die Felge wirkende Kräfte angeregt werden. Um zu verhindern, dass das Fahrzeugrad in eine störende Resonanz gerät, muss daher lediglich eine definierte Anzahl von steifigkeitsveränderten Bereichen definiert angeordnet werden. Die gleichmäßige Beabstandung der steifigkeitsveränderten Bereiche hat dabei zudem den Vorteil, dass keine unerwünschte Unwucht des Fahrzeugrads erzeugt wird.

Weiter bevorzugt ist der wenigstens eine steifigkeitsveränderte Bereich, in Felgen-Querrichtung gesehen, in einem mittleren Felgenbereich eines Felgenrings der Felge und/oder an einem Felgenbett eines Felgenrings der Felge ausgebildet und/oder angeordnet. Dadurch kann, insbesondere bei einer radialen Anregung der Felge, eine effektive definierte Einstellung und/oder Verschiebung der wenigstens einen Resonanzfrequenz sichergestellt werden. Sofern die Felge als Tiefbett-Felge ausgebildet ist, kann der steifigkeitsveränderte Bereich dabei vorzugsweise an dem Tiefbett der Felge angeordnet und/oder ausgebildet sein.

Vorzugsweise ist der wenigstens eine steifigkeitsveränderte Bereich an einer, im montierten Zustand eines Reifens, dem Reifen zugewandten Außenseite des Felgenrings, insbesondere eines Felgenbettes des Felgenrings, angeordnet und/oder ausgebildet. So wird aufgrund der flächigen und regelmäßig standardisierten Ausbildung des Felgenrings eine besonders einfache Anordnung und/oder Ausbildung des steifigkeitsveränderten Bereichs möglich. Zudem kann der steifigkeitsveränderte Bereich dadurch auch auf optisch vorteilhaft Weise äußerlich unsichtbar an dem Fahrzeugreifen angeordnet und/oder ausgebildet werden.

Gemäß einer nicht von der Erfindung umfassten Vergleichsform ist der wenigstens eine steifigkeitsveränderte Bereich durch wenigstens ein an der Felge angeordnetes, insbesondere stoffschlüssig festgelegtes, Versteifungselement gebildet.
Das nicht von der Erfindung umfasste Versteifungselement kann flächig und/oder flickenartig bzw. im weitesten Sinne plattenförmig bzw. plattenartig ausgebildet sein, um das Versteifungselement besonders platzsparend und/oder optisch unauffällig auszubilden. Weiter kann das nicht von der Erfindung umfasste Versteifungselement aus einem flexiblen Material ausgebildet sein, um die Anordnung des Versteifungselements zu vereinfachen. Das Material des nicht von der Erfindung umfassten Versteifungselements zudem dimensionsstabil ausgebildet sein, um eine zuverlässige Versteifung der Felge an dem wenigstens einen steifigkeitsveränderten Bereich sicherzustellen.

Das nicht von der Erfindung umfasste Versteifungselement kann vorzugsweise aus einem Verbundwerkstoff, insbesondere aus einem Faserverbundwerkstoff, hergestellt sein, um das Versteifungselement mit den gewünschten Eigenschaften, insbesondere äußerst steif und leicht, auszubilden.

Konkret kann die Felge selbst als Stahlfelge und/oder als Leichtmetallfelge, insbesondere als Aluminiumfelge, ausgebildet sein. Dies hat den Vorteil, dass der steifigkeitsveränderte Bereich somit an herkömmlichen bzw. gängigen Felgen ausgebildet wird, die für viele Fahrzeuge verfügbar sind. Zudem kann der steifigkeitsveränderte Bereich an diesen aus Metall gefertigten Felgen besonders einfach ausgebildet werden.

In einer erfindungsgemäßen Ausführungsform ist der wenigstens eine steifigkeitsveränderte Bereich durch eine Aufschweißung, insbesondere durch einen Schweißpunkt als punktförmige Aufschweißung und/oder durch eine Schweißnaht als linienförmige Aufschweißung, gebildet. Dadurch kann der wenigstens eine steifigkeitsveränderte Bereich mit besonders geringem Aufwand an der Felge ausgebildet werden. Das Aufschweißungsmaterial kann dabei als jedes geeignete Material ausgebildet sein, vorzugsweise aber ähnlich oder identisch mit dem Material der Felge sein.

Konkret kann der wenigstens eine steifigkeitsveränderte Bereich dabei durch mehrere in Umfangsrichtung voneinander beabstandete und sich in Querrichtung über eine definierte Länge der Felge, insbesondere eines Felgenrings und/oder eines Felgenbettes, erstreckende punkt- und/oder linienförmige Aufschweißungen gebildet sein, um die Aufschweißungen auf einfache Weise lokal begrenzt auszubilden.

In einer weiteren alternativen und/oder zusätzlichen Ausführung ist der wenigstens eine steifigkeitsveränderte Bereich weiter erfindungsgemäß durch einen gegenüber dem unmittelbar angrenzenden Felgenbereich und/oder gegenüber dem Grund- oder Herstellzustand der Felge in diesem Bereich gefügeveränderten Bereich, insbesondere durch einen durch thermische Behandlung gefügeveränderten Bereich, gebildet. Auf diese Weise wird der steifigkeitsveränderte Bereich besonders funktionssicher ausgebildet, da an der Felge beispielsweise kein zusätzliches Versteifungselement angeordnet werden muss, das sich eventuell lösen kann. Zudem wird bei einer derartigen Ausbildung des Steifigkeitsbereichs auch die Montage eines Reifens des Fahrzeugrads nicht behindert.

Auch der wenigstens eine durch Gefügeveränderung steifigkeitsveränderte Bereich kann vorzugsweise durch mehrere in Umfangsrichtung voneinander beabstandete und sich in Querrichtung über eine definierte Länge der Felge, insbesondere eines Felgenrings und/oder eines Felgenbettes, erstreckende punkt- und/oder linienförmige Gefügeänderungen gebildet sein, um die Gefügeveränderungen auf einfache Weise lokal begrenzt auszubilden.

Zur Lösung der bereits erläuterten Aufgabe wird ferner ein Verfahren zur Optimierung des Rollgeräuschs eines Fahrzeugrads, insbesondere eines Kraftfahrzeugrads vorgeschlagen, wobei das Fahrzeugrad eine Felge aufweist. Erfindungsgemäß wird die Steifigkeit der Felge an oder in wenigstens einem definiert vorgegebenen, lokal begrenzten Felgenbereich gegenüber einem unmittelbar angrenzenden Felgenbereich und/oder gegenüber einem Grund- oder Herstellzustand der Felge verändert, insbesondere derart verändert, dass wenigstens eine Resonanzfrequenz des Fahrzeugrads definiert eingestellt und/oder verschoben wird. Erfindungsgemäß wird zur Steifigkeitsveränderung wenigstens eine Aufschweißung und/oder wenigstens eine Gefügeänderung an dem wenigstens einen definiert vorgegebenen, lokal begrenzten Felgenbereich vorgesehen.

Die sich aus dieser Verfahrensführung ergebenden Vorteile sind identisch mit den bereits gewürdigten Vorteilen der erfindungsgemäßen Felge, so dass diese hier nicht wiederholt werden.

In einer nicht von der Erfindung umfassten Verfahrensführung wird zur Steifigkeitsänderung wenigstens ein Versteifungselement, vorzugsweise wenigstens ein flächiges und/oder flickenartiges und/oder aus einem dimensionsstabilen und/oder flexiblen Material hergestelltes Versteifungselement, an dem wenigstens einen definiert vorgegebenen, lokal begrenzten Felgenbereich angebracht, insbesondere stoffschlüssig festgelegt. Gemäß einer ersten erfindungsgemäßen Verfahrensführung wird zur Steifigkeitsänderung wenigstens eine, vorzugsweise punkt- und/oder linienförmige, Aufschweißung an dem wenigstens einen definiert vorgegebenen, lokal begrenzten Felgenbereich vorgesehen. Dadurch kann der wenigstens eine steifigkeitsveränderte Bereich mit besonders geringem Aufwand an der Felge ausgebildet werden.

Weiter alternativ und/oder zusätzlich wird gemäß einer zweiten erfindungsgemäßen Verfahrensführung zur Steifigkeitsänderung wenigstens eine, vorzugsweise punkt- und/oder linienförmige, Gefügeänderung, insbesondere eine durch thermische Behandlung bewirkte Gefügeänderung, an dem wenigstens einen definiert vorgegebenen, lokal begrenzten Felgenbereich vorgesehen. Auf diese Weise wird der steifigkeitsveränderte Bereich, wie auch bereits erläutert, besonders funktionssicher ausgebildet.

Vorzugsweise wird der wenigstens eine durch Gefügeveränderung und/oder durch Aufschweißung steifigkeitsveränderte Bereich durch mehrere in Umfangsrichtung voneinander beabstandete und sich in Querrichtung über eine definierte Länge der Felge, insbesondere eines Felgenrings und/oder eines Felgenbettes, erstreckende punkt- und/oder linienförmige Gefügeänderungen und/oder Aufschweißungen gebildet, wobei bevorzugt vorgesehen ist, dass mehrere lokal begrenzte und/oder gleich ausgebildete steifigkeitsveränderte Bereiche in Felgenumfangsrichtung gesehen voneinander beabstandet, insbesondere gleichmäßig voneinander beabstandet, an der Felge ausgebildet und/oder angeordnet werden.

Die vorstehend erläuterten und/oder in den Unteransprüchen wiedergegebenen vorteilhaften Aus- und/oder Weiterbildungen können - außer zum Beispiel in den Fällen eindeutiger Abhängigkeiten oder unvereinbarer Alternativen, einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnung lediglich beispielhaft näher erläutert.

Es zeigen:
- Fig. 1: in einer Perspektivdarstellung eine nicht von der Erfindung umfassten Vergleichsform einer Felge;
- Fig. 2: eine Draufsicht auf die Felge;
- Fig. 3: eine Ansicht, anhand der die Anordnung von nicht von der Erfindung umfassten Versteifungselementen der Felge erläutert wird;
- Fig. 4: in einer Ansicht gemäß Fig. 2 eine erste Ausführungsform der erfindungsgemäßen Felge;
- Fig. 5: eine Ansicht, anhand der die Anordnung von Wärmebehandlungsbereichen der ersten Ausführungsform der Felge erläutert wird;
- Fig. 6: einen Schnitt durch einen Felgenring der Felge; und
- Fig. 7: beispielhaft ein Fahrzeug mit mehreren Fahrzeugrädern, deren Felgen entsprechend der Fig. 4 und 5 ausgebildet sein können.

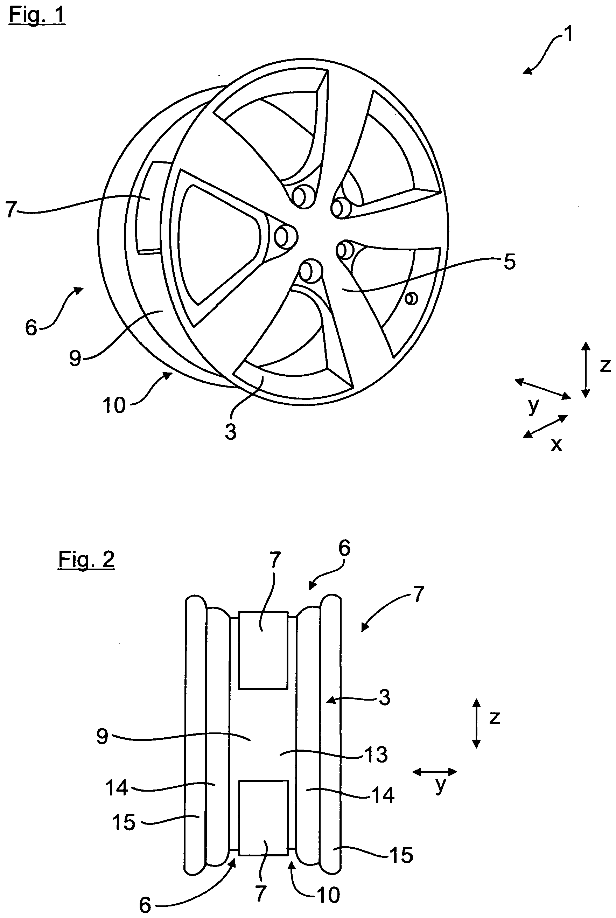

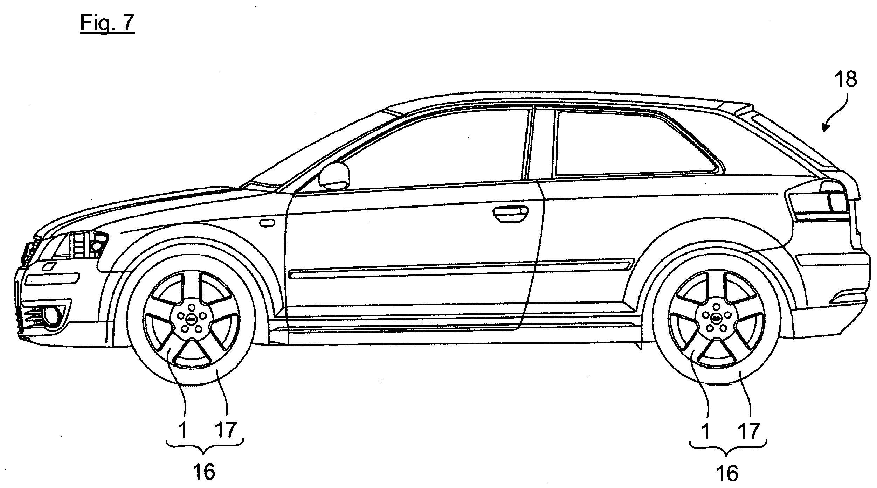

In Fig. 1 ist eine Felge 1 für ein Kraftfahrzeugrad 16 (Fig. 7) gezeigt. Die Felge 1 weist, in Radialrichtung gesehen, außen einen Felgenring 3 und eine sich, in Radialrichtung gesehen, innen an den Felgenring 3 anschließende, materialeinheitlich und einstückig mit dem Felgenring 3 verbundene Radschüssel 5 auf. Mittels des Felgenrings 3 der Felge 1 kann in bekannter Weise ein Reifen 17 (Fig. 7) des Kraftfahrzeugrads 16 gehaltert werden. Die Radschüssel 5 der Felge 1 bildet in bekannter Weise das Verbindungsstück zwischen dem Felgenring 3 und einer Radnabe eines Kraftfahrzeuges 18 (Fig. 7) aus. Die in Fig. 1 gezeigte Felge 1 ist hier beispielhaft aus Aluminium hergestellt. Ebenso kann die Felge aber auch aus jeglichem anderen geeigneten Material, beispielsweise auch aus Stahl oder aus einem anderen Leichtmetall als Aluminium, hergestellt sein.

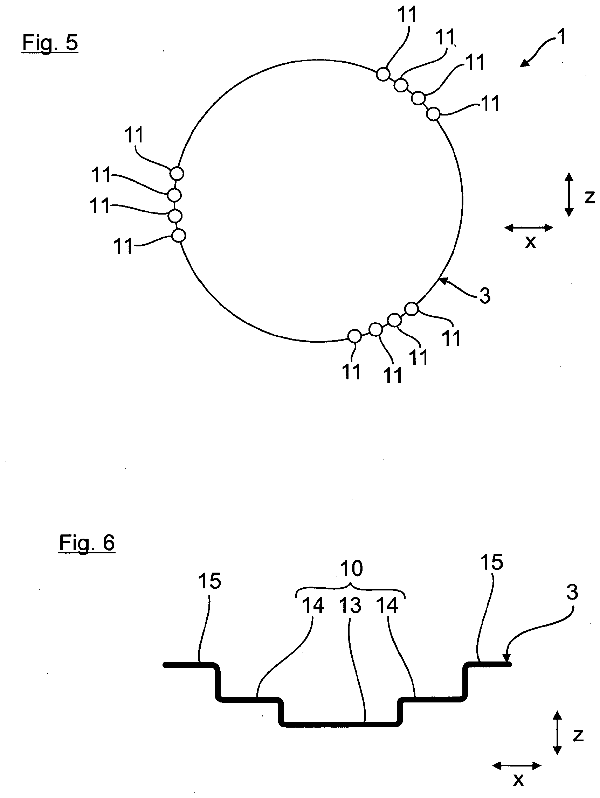

Zur Verdeutlichung des Aufbaus des in den Figuren gezeigten Felgenrings 3 ist in Fig. 6 weiter ein Teilschnitt durch den Felgenring 3 gezeigt. Daraus geht hervor, dass der Felgenring 3 hier als Tiefbett-Felgenring ausgebildet ist. Das Felgenbett 10 des Felgenrings 3 weist hier daher, in Felgen-Querrichtung y gesehen, mittig ein Tiefbett 13 und sich seitlich außen an das Tiefbett 13 anschließende Felgenschultern 14 auf. In Felgen-Querrichtung y gesehen, weiter außen schließen Felgenhörner 15 an das Felgenbett 10 an.

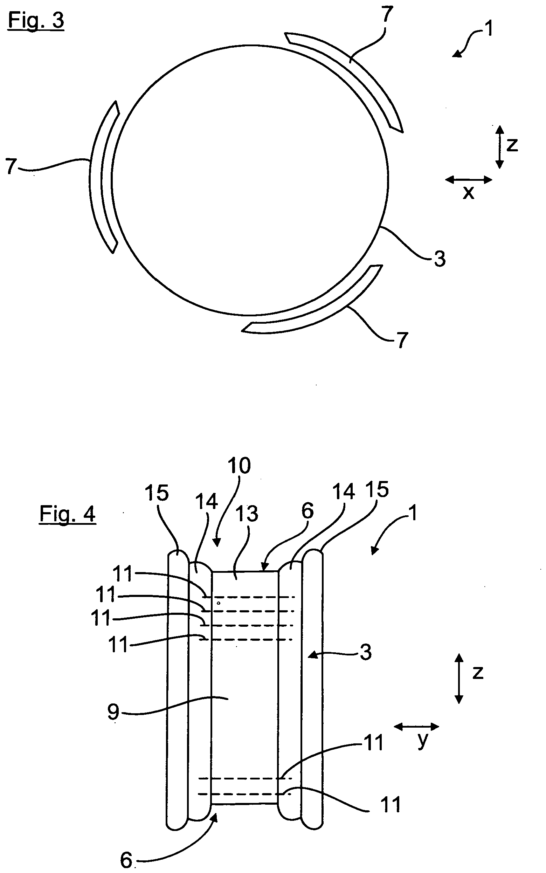

Wie insbesondere aus Fig. 3 hervorgeht, weist die Felge 1 mehrere, hier beispielhaft drei, Versteifungselemente 7 auf, die nicht von der Erfindung umfasst sind. Jedes der Versteifungselemente 7 ist an einem definiert lokal begrenzt an der Felge 1 vorgegebenen Bereich derart festgelegt, dass die Felge 1 dort einen steifigkeitsveränderten Bereich 6 ausbildet. Durch diese definierten lokalen Versteifungen der Felge 1 wird zumindest eine definierte Resonanzfrequenz des Fahrzeugrads derart eingestellt und/oder verschoben, dass das Rollgeräusch des Fahrzeugrads optimiert ist. Die Versteifungselemente 7 sind hier beispielhaft als sogenannte "CFK-Patches" ausgeführt. Das heißt, dass die Versteifungselemente 7 hier aus einem mit Kohlefasern verstärkten Kunststoffmaterial hergestellt und flickenartig ausgebildet sind. Selbstverständlich können die Versteifungselemente 7 auch aus jedem anderen zweckmäßigen Material hergestellt sein, hier beispielsweise auch aus Aluminium, um die Versteifungselemente 7 materialeinheitlich und/oder einstückig, beispielsweise mittels einer Schweißverbindung, an der Felge 1 festzulegen. Die hier gezeigten "CFK-Patches" sind vorzugsweise stoffschlüssig, insbesondere mittels einer Klebeverbindung, an der Felge 1 festgelegt.

Aus den Fig. 2 und 3 geht die Anordnung der Versteifungselemente 7, die nicht von der Erfindung umfasst sind, an der Felge 1 genauer hervor. Gemäß Fig. 2 sind die Versteifungselemente 7 an einer Außenseite 9 des Felgenbetts 10 des Felgenrings 3, hier beispielsweise an dem Tiefbett 13, angeordnet bzw. festgelegt. Wie weiter in Fig. 3 gezeigt ist, sind die Versteifungselemente 7 zudem, in Felgen-Umfangsrichtung gesehen, gleichmäßig voneinander beabstandet an der Felge 1 angeordnet.

In den Fig. 4 und 5 ist eine erste Ausführungsform der erfindungsgemäßen Felge 1 gezeigt. Die Felge 1 weist hier - im Gegensatz zur in Figuren 1 bis 3 gezeigten Vergleichsform - zur Ausbildung der steifigkeitsveränderten Bereiche 6 keine Versteifungselemente 7 auf. Vielmehr weist die Felge 1 hier zur Ausbildung der steifigkeitsveränderten Bereiche 6 erfindungsgemäß Aufschweißungen auf, mittels denen die Steifigkeit der Felge 1 in diesen Bereichen 6 gegenüber einem Grund- und/oder Herstellzustand der Felge 1 erhöht ist. Konkret weist die Felge 1, hier lediglich beispielhaft, an jedem der Steifigkeitsbereiche 6 jeweils mehrere sich in Felgen-Querrichtung y erstreckende, in Felgen-Umfangsrichtung voneinander beabstandete, in Fig. 4 mit gestrichelten Linien angedeutete Reihen von Schweißnähten 11 auf, die hier durch eine durchgehende Schweißnaht oder aber auch, wie dargestellt, durch mehrere voneinander beabstandete linienförmige Schweißnähte gebildet sein können. Die Schweißnähte 11 sind an dem Felgenring 3 der Felge 1 ausgebildet und erstrecken sich hier beispielhaft über das gesamte Tiefbett 10 bis in die Felgenschultern 14 des Felgenrings 3. Alternativ zu den Schweißnähten 11 könnten die durchgehenden oder einzelnen linienförmigen Aufschweißungen auch mittels mehrerer beabstandeter Schweißpunkte ausgebildet werden.

Alternativ zu der Ausbildung mittels Aufschweißungen können die in den Fig. 4 und 5 gezeigten steifigkeitsveränderten Bereiche 6 auch erfiondungsgemäß durch lokale Gefügeänderungen des Felgenmaterials ausgebildet werden. Diese Gefügeänderungen können dabei beispielsweise durch eine thermische Behandlung der Felge gebildet werden. Mittels der Gefügeänderungen kann die Steifigkeit an oder in den einzelnen Bereichen definiert erhöht oder aber auch definiert verringert werden, je nach dem welche Veränderung der Steifigkeit hier zweckmäßig bzw. gewünscht ist. Auch hier kann beispielsweise ein Muster ausgebildet werden, wie es in Verbindung mit Fig. 4 bereits erläutert worden ist, das heißt es können pro steifigkeitsveränderten Bereich 6 mehrere in Umfangsrichtung voneinander beabstandete Reihen von gefügeveränderten Berteichen ausgebildet sein, wobei die Reihen selbst als durchgehende Linie oder durch einzelne beabstandete Linien oder Punkte gebildet sind.

Ebenso können in den steifigkeitsveränderten Bereichen 6 mehrere in Querrichtung beabstandete Reihen von Aufschweißungen oder Gefügeänderungen vorgesehen sein, die sich in Umfangsrichtung erstrecken. Auch hier können Reihen als durchgehende Linien oder durch voneinander beabstandete Linien oder Punkte ausgebildet sein. Grundsätzlich könnten auch andere Muster vorgesehen sein, beispielsweise regelmäßige Punktmuster oder durch diagonal verlaufende parallele Linien gebildete Muster, um nur einige weitere Beispiele zu nennen.

## Patentansprüche

1. Felge für ein Fahrzeugrad, insbesondere für ein Kraftfahrzeugrad, wobei die Felge (1) zur Optimierung des Rollgeräuschs des Fahrzeugrades (16), insbesondere zur definierten Einstellung und/oder Verschiebung wenigstens einer Resonanzfrequenz des Fahrzeugrads (16), wenigstens einen lokal begrenzten steifigkeitsveränderten Bereich (6) aufweist, an oder in dem die Steifigkeit der Felge (1) gegenüber einem unmittelbar angrenzenden Felgenbereich und/oder gegenüber einem Grund- oder Herstellzustand der Felge (1) in diesem Bereich verändert ist, **dadurch gekennzeichnet, dass** der wenigstens eine steifigkeitsveränderte Bereich (6) durch eine Aufschweißung und/oder durch einen gefügeveränderten Bereich gebildet ist.

2. Felge nach Anspruch 1, **dadurch gekennzeichnet, dass** die Felge (1) mehrere lokal begrenzte und/oder gleich ausgebildete steifigkeitsveränderte Bereiche (6) aufweist, die in Felgenumfangsrichtung gesehen voneinander beabstandet sind, insbesondere gleichmäßig voneinander beabstandet sind.

3. Felge nach Anspruch 1 oder 2, **dadurch gekennzeichnet, dass** der wenigstens eine steifigkeitsveränderte Bereich (6), in Felgen-Querrichtung (y) gesehen, in einem mittleren Felgenbereich eines Felgenrings (3) der Felge (1) und/oder an einem Felgenbett (10) eines Felgenrings (3) der Felge (1) ausgebildet und/oder angeordnet ist.

4. Felge nach einem der vorhergehenden Ansprüche, **dadurch gekennzeichnet, dass** der wenigstens eine steifigkeitsveränderte Bereich (6), an einer, im montierten Zustand eines Reifens (17), dem Reifen (17) zugewandten Außenseite (9) des Felgenrings (3), insbesondere eines Felgenbettes (10) des Felgenrings (3), angeordnet und/oder ausgebildet ist.

5. Felge nach einem der vorhergehenden Ansprüche, **dadurch gekennzeichnet, dass** der wenigstens eine steifigkeitsveränderte Bereich (6) im Falle einer Aufschweißung durch einen Schweißpunkt als punktförmige Aufschweißung und/oder durch eine Schweißnaht (11) als linienförmige Aufschweißung gebildet ist.

6. Felge nach Anspruch 5, **dadurch gekennzeichnet, dass** der wenigstens eine steifigkeitsveränderte Bereich (6) durch mehrere in Umfangsrichtung voneinander beabstandete und sich in Querrichtung über eine definierte Länge der Felge (1), insbesondere eines Felgenrings (3) und/oder eines Felgenbettes (10), erstreckende punkt- und/oder linienförmige Aufschweißungen gebildet ist.

7. Felge nach einem der vorhergehenden Ansprüche, **dadurch gekennzeichnet, dass** der wenigstens eine steifigkeitsveränderte Bereich (6) im Falle eines gefügeveränderten Bereichs durch einen durch thermische Behandlung gefügeveränderten Bereich gebildet ist.

8. Felge nach Anspruch 7, **dadurch gekennzeichnet, dass** der wenigstens eine durch Gefügeveränderung steifigkeitsveränderte Bereich (6) durch mehrere in Umfangsrichtung voneinander beabstandete und sich in Querrichtung über eine definierte Länge der Felge (1), insbesondere eines Felgenrings (3) und/oder eines Felgenbettes (10), erstreckende punkt- und/oder linienförmige Gefügeänderungen gebildet ist.

9. Verfahren zur Optimierung des Rollgeräuschs eines Fahrzeugrades, insbesondere eines Kraftfahrzeugrads, wobei das Fahrzeugrad (16) eine Felge (1) aufweist, wobei die Steifigkeit der Felge (1) an oder in wenigstens einem definiert vorgegebenen, lokal begrenzten Felgenbereich gegenüber einem unmittelbar angrenzenden Felgenbereich und/oder gegenüber einem Grund- oder Herstellzustand der Felge (1) verändert wird, insbesondere derart verändert wird, dass wenigstens eine Resonanzfrequenz des Fahrzeugrads (16) definiert eingestellt und/oder verschoben wird, **dadurch gekennzeichnet, dass** zur Steifigkeitsänderung wenigstens eine Aufschweißung an dem wenigstens einen definiert vorgegebenen, lokal begrenzten Felgenbereich vorgesehen wird und/oder wenigstens eine Gefügeänderung an dem wenigstens einen definiert vorgegebenen, lokal begrenzten Felgenbereich vorgesehen wird.

10. Verfahren nach Anspruch 9, **dadurch gekennzeichnet, dass** die wenigstens eine Aufschweißung punkt- und/oder linienförmige an dem wenigstens einen definiert vorgegebenen, lokal begrenzten Felgenbereich zur Steifigkeitsänderung vorgesehen wird.

11. Verfahren nach Anspruch 9 oder 10, **dadurch gekennzeichnet, dass** die wenigstens eine Gefügeänderung, die insbesondere eine durch thermische Behandlung bewirkte Gefügeänderung ist, punkt- und/oder linienförmige an dem wenigstens einen definiert vorgegebenen, lokal begrenzten Felgenbereich zur Steifigkeitsänderung vorgesehen wird.

12. Verfahren nach einem der Ansprüche 9 bis 11, **dadurch gekennzeichnet, dass** der wenigstens eine durch Gefügeveränderung und/oder durch Aufschweißung steifigkeitsveränderte Bereich (6) durch mehrere in Umfangsrichtung voneinander beabstandete und sich in Querrichtung über eine definierte Länge der Felge (1), insbesondere eines Felgenrings (3) und/oder eines Felgenbettes (10), erstreckende punkt- und/oder linienförmige Gefügeänderungen und/oder Aufschweißungen gebildet ist, wobei bevorzugt vorgesehen ist, dass mehrere lokal begrenzte und/oder gleich ausgebildete steifigkeitsveränderte Bereiche in Felgenumfangsrichtung gesehen voneinander beabstandet, insbesondere gleichmäßig voneinander beabstandet, an der Felge (1) ausgebildet und/oder angeordnet werden.

## Claims

1. Rim for a vehicle wheel, in particular for a motor vehicle wheel, wherein, in order to optimise the rolling noise of the vehicle wheel (16), in particular in order to adjust and/or displace at least one resonant frequency of the vehicle wheel (16) in a defined manner, the rim (1) has at least one locally delimited rigidity-modified area (6) on or in which the rigidity of the rim (1) is modified compared to an immediately adjacent rim area and/or modified compared to a basic or manufacturing state of the rim (1) in this area, **characterised in that** the at least one rigidity-modified area (6) is formed by a weld and/or by a structure-modified area.

2. Rim according to claim 1, **characterised in that** the rim (1) has a plurality of locally delimited and/or identically designed rigidity-modified areas (6) which are spaced apart from one another, in particular evenly spaced apart from one another, viewed in the circumferential direction of the rim.

3. Rim according to claim 1 or 2, **characterised in that** the at least one rigidity-modified area (6), viewed in the transverse direction of the rim (y), is formed and/or arranged in a central rim area of a rim ring (3) of the rim (1) and/or on a rim base (10) of a rim ring (3) of the rim (1).

4. Rim according to any of the preceding claims, **characterised in that** the at least one rigidity-modified area (6) is arranged and/or formed on an outer side (9) of the rim ring (3), in particular of a rim base (10) of the rim ring (3), facing the tyre (17) in the mounted state of a tyre (17).

5. Rim according to any of the preceding claims, **characterised in that** the at least one rigidity-modified area (6), in the case of a weld, is formed by a spot weld as a punctiform weld and/or by a weld seam (11) as a linear weld.

6. Rim according to claim 5, **characterised in that** the at least one rigidity-modified area (6) is formed by a plurality of punctiform and/or linear welds spaced apart from one another in the circumferential direction and extending in the transverse direction over a defined length of the rim (1), in particular of a rim ring (3) and/or a rim base (10).

7. Rim according to any of the preceding claims, **characterised in that** the at least one rigidity-modified area (6), in the case of a structure-modified area, is formed by an area which has been structurally modified by thermal treatment.

8. Rim according to claim 7, **characterised in that** the at least one area (6) modified in terms of rigidity by structural modification is formed by a plurality of punctiform and/or linear structural modifications spaced apart from one another in the circumferential direction and extending in the transverse direction over a defined length of the rim (1), in particular of a rim ring (3) and/or a rim base (10).

9. Method for optimising the rolling noise of a vehicle wheel, in particular a motor vehicle wheel, wherein the vehicle wheel (16) has a rim (1), wherein the rigidity of the rim (1) is modified, on or in at least one rim area which is predetermined in a defined manner and locally delimited, compared to an immediately adjacent rim area and/or compared to a basic or manufacturing state of the rim (1), in particular is modified in such a way that at least one resonant frequency of the vehicle wheel (16) is adjusted and/or displaced in a defined manner, **characterised in that**, for rigidity modification, at least one weld is provided on the at least one rim area which is predetermined in a defined manner and locally delimited, and/or at least one structural modification is provided on the at least one rim area which is predetermined in a defined manner and locally delimited.

10. Method according to claim 9, **characterised in that** the at least one weld is provided for rigidity modification in a punctiform and/or linear manner on the at least one rim area which is predetermined in a defined manner and locally delimited.

11. Method according to claim 9 or 10, **characterised in that** the at least one structural modification, which is in particular a structural modification effected by thermal treatment, is provided for rigidity modification in a punctiform and/or linear manner on the at least one rim area which is predetermined in a defined manner and locally delimited.

12. Method according to any of claims 9 to 11, **characterised in that** the at least one area (6) modified in terms of rigidity by structural modification and/or by welding is formed by a plurality of punctiform and/or linear structural modifications and/or welds spaced apart from one another in the circumferential direction and extending in the transverse direction over a defined length of the rim (1), in particular of a rim ring (3) and/or a rim base (10), wherein it is preferably provided that a plurality of locally delimited and/or identically designed rigidity-modified areas are formed and/or arranged on the rim (1) so as to be spaced apart from one another, in particular evenly spaced apart from one another, viewed in the circumferential direction of the rim.

## Revendications

1. Jante pour une roue de véhicule, en particulier pour une roue de véhicule à moteur, dans lequel la jante (1) présente au moins une zone (6) à rigidité modifiée localement limitée pour optimiser le bruit de roulement de la roue du véhicule (16), en particulier pour le réglage et/ou le déplacement défini d'au moins une fréquence de résonance de la roue de véhicule (16), sur ou dans laquelle la rigidité de la jante (1) est modifiée dans cette zone par rapport à une zone de jante immédiatement adjacente et/ou par rapport à une condition de base ou de fabrication de la jante (1), **caractérisée en ce que** l'au moins une zone à rigidité modifiée (6) est formée par une soudure et/ou par une zone à structure modifiée.

2. Jante selon la revendication 1, **caractérisée en ce que** la jante (1) présente plusieurs zones à rigidité modifiée (6) localement limitées et/ou réalisées de manière identique, qui sont espacées l'une de l'autre dans la direction de circonférence de jante, en particulier qui sont uniformément espacées les unes des autres.

3. Jante selon la revendication 1 ou 2, **caractérisée en ce que** l'au moins une zone à rigidité modifiée (6), vue dans la direction transversale (y) de la jante, est réalisée et/ou agencée dans une zone de jante centrale d'un anneau de jante (3) de la jante (1) et/ou sur un fond de jante (10) d'un anneau de jante (3) de la jante (1).

4. Jante selon l'une quelconque des revendications précédentes, **caractérisée en ce que** l'au moins une zone à rigidité modifiée (6) est agencée et/ou réalisée sur un côté extérieur (9) de l'anneau de jante (3), en particulier d'un fond de jante (10) de l'anneau de jante (3), tourné vers le pneu (17) dans l'état monté d'un pneu (17).

5. Jante selon l'une quelconque des revendications précédentes, **caractérisée en ce que** l'au moins une zone à rigidité modifiée (6) est formée par un point de soudure en tant que soudure par points et/ou par un cordon de soudure (11) en tant que soudure linéaire en cas de soudure.

6. Jante selon la revendication 5, **caractérisée en ce que** l'au moins une zone à rigidité modifiée (6) est formée par plusieurs soudures par points et/ou linéaires espacées les unes des autres dans la direction circonférentielle et s'étendant dans la direction transversale sur une longueur définie de la jante (1), en particulier d'un anneau de jante (3) et/ou d'un fond de jante (10).

7. Jante selon l'une quelconque des revendications précédentes, **caractérisée en ce que** l'au moins une zone à rigidité modifiée (6), dans le cas d'une zone à structure modifiée, est formée par une zone à structure modifiée par traitement thermique.

8. Jante selon la revendication 7, **caractérisée en ce que** l'au moins une zone à rigidité modifiée (6) par modification de structure est formée par plusieurs modifications de structure par points et/ou linéaires espacées les unes des autres dans la direction circonférentielle et s'étendant dans la direction transversale sur une longueur définie de la jante (1), en particulier d'un anneau de jante (3) et/ou d'un fond de jante (10).

9. Procédé d'optimisation du bruit de roulement d'une roue de véhicule, en particulier d'une roue de véhicule à moteur, dans lequel le véhicule (16) présente une jante (1), dans lequel la rigidité de la jante (1) sur ou dans au moins une zone de jante définie localement limitée est modifiée par rapport à une zone de jante immédiatement adjacente et/ou par rapport à un état de base ou de fabrication de la jante (1), en particulier est modifiée de sorte qu'au moins une fréquence de résonance de la roue de véhicule (16) est réglée et/ou décalée de manière définie, **caractérisé en ce qu'**au moins une soudure est prévue sur la l'au moins une zone de jante définie, prédéterminée, localement limitée pour modifier la rigidité et/ou au moins une modification de structure est prévue sur l'au moins une zone de jante définie, prédéterminée, localement limitée.

10. Procédé selon la revendication 9, **caractérisé en ce que** l'au moins une soudure est prévue sont par points et/ou linéaire sur l'au moins une zone de jante définie localement limitée afin de modifier la rigidité.

11. Procédé selon la revendication 9 ou 10, **caractérisé en ce que** l'au moins une modification de structure, qui est en particulier une modification de structure provoquée par un traitement thermique, est prévue par points et/ou de manière linéaire sur l'au moins une zone de jante définie localement limitée afin de modifier la rigidité.

12. Procédé selon l'une quelconque des revendications 9 à 11, **caractérisé en ce que** l'au moins une zone à rigidité modifiée (6) par modification de structure et/ou par soudure, est formée par plusieurs modifications de structure et/ou soudures par points et/ou linéaires espacées les unes des autres dans la direction circonférentielle s'étendant dans la direction transversale sur une longueur définie de la jante (1), en particulier d'un anneau de jante (3) et/ou d'un fond de jante (10), dans lequel il est de préférence prévu que plusieurs zones à rigidité modifiée rigidité localement limitées et/ou réalisées de manière identique sont réalisées et/ou disposées sur la jante (1) de manière espacée les unes des autres, en particulier de manière uniformément espacée les unes des autres, vues dans la direction circonférentielle de jante.
